# EUROPEAN PATENT APPLICATION

(11) **EP 1 126 569 A1**
(43) Date of publication of application: **22.08.2001**
(21) Application number: 01101041.0
(22) Date of filing: 18.01.2001
(51) Int. Cl.: H02G 3/04

(54) **Metal mesh-wire cable tray**

(30) Priority: 14.02.2000 IT PN000010
(71) Applicant: Elleci S.p.A., 33080 Porcia (PN) (IT)
(72) Inventor: Corazza, Claudio, 33080 Porcia, Pordenone (IT)
(74) Representative: Busca, Luciano

(57) **Abstract**

Mesh-wire cable tray formed by longitudinal metal wires (1) welded to U-shaped cross-members (2). The upper ends of the side portions (4) of each cross-member (2) are connected with the upper ends of the side portions (4) of another cross-member (2) by means of longitudinal elements (5) that are provided in a single piece of metal wire (6; 7) bent with the so connected cross-members (2).

## Description

The present invention refers to a mesh-wire cable tray made of metal wires, wherein the term cable is used to include any kind of cables and pipings, such as power cables, water conduits, optical cables and the like.

Such mesh-wire cable trays are generally known in the art as being made by assembling into a wire mesh a plurality of longitudinal metal wires and a plurality of transversal metal wires that are then bent into a substantially U-shaped configuration.

These longitudinal and transversal wires have preferably the same cross-section area, are made for instance of steel, and are preferably assembled by spot-welding, ie. a technique that is both simple to carry out and requires relatively simple and low-cost equipment.

A mesh-wire cable tray of the above cited kind is for instance described in EP-A-0 298 825, in which the upper edges of the tray are constituted by respective longitudinal metal wires welded to the butt-ends of the U-shaped transversal wires, in such a manner as to eliminate a possible presence of sharp edges in correspondence of the same butt-ends, which might cause operators to suffer injuries and/or the cables to undergo damages when being laid down on the same tray.

On the other hand, the above cited butt welding operation shall be carried out by having resort to the induction welding technique, which involves a specific, rather critical processing phase and requires the use of complex, expensive equipment.

In any case, manufacturing a mesh-wire cable tray of the above described type requires handling and welding a relatively large number of component parts, owing mainly to the large amount of transversal wires that must be used.

It therefore is a main purpose of the present invention to provide a metal mesh-wire cable tray which is substantially free of sharp edges and is capable of being made with a limited number of component parts to be assembled.

A further purpose of the present invention is to provide a mesh-wire cable tray of the cited kind, which is capable of being manufactured in a rational and low-cost manner on an industrial scale.

According to the present invention, these aims are reached in a metal mesh-wire cable tray featuring the characteristics as recited in the appended claims.

Features and advantages of the present invention will anyway be more readily and clearly understood from the description that is given below by way of non-limiting example with reference to the accompanying drawings, in which:
- Figure 1 is a perspective partial view of a preferred embodiment of the present invention;
- Figure 2 is a perspective partial view of a component part of the cable tray illustrated in Figure 1;
- Figure 3 is an enlarged cross-sectional view of the cable trays illustrated in Figures 1 and 5;
- Figure 4 is an enlarged partial plan view of the cable tray illustrated in Figure 1;
- Figure 5 is a perspective partial view of a variant of the cable tray illustrated in Figure 1;
- Figure 6 is a perspective view of some component parts of the cable tray illustrated in Figure 5;
- Figure 7 is a cross-sectional view of another variant of the cable tray illustrated in Figure 1; and
- Figure 8 is a plan view of the cable tray illustrated in Figure 7.

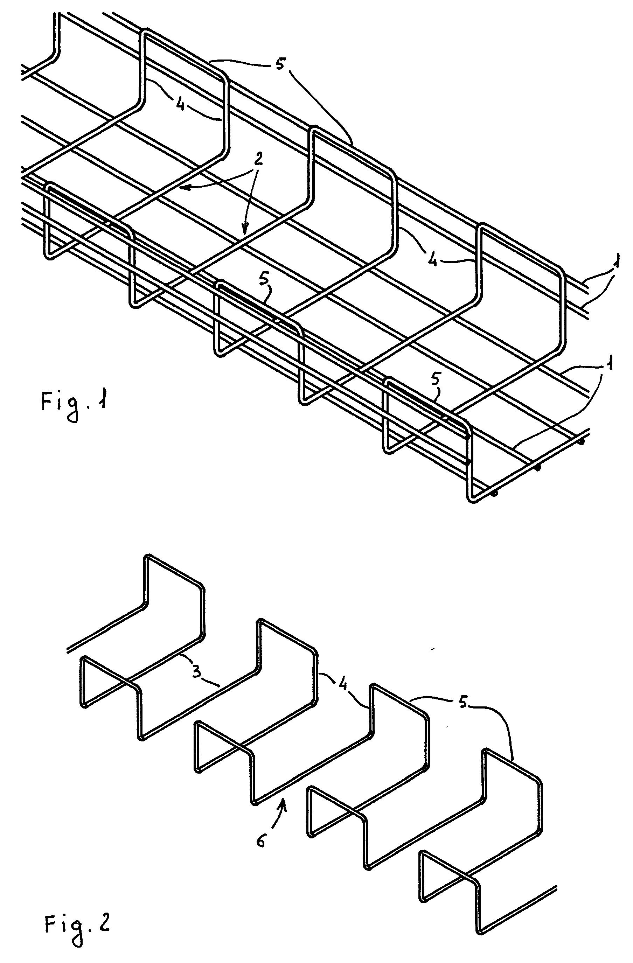

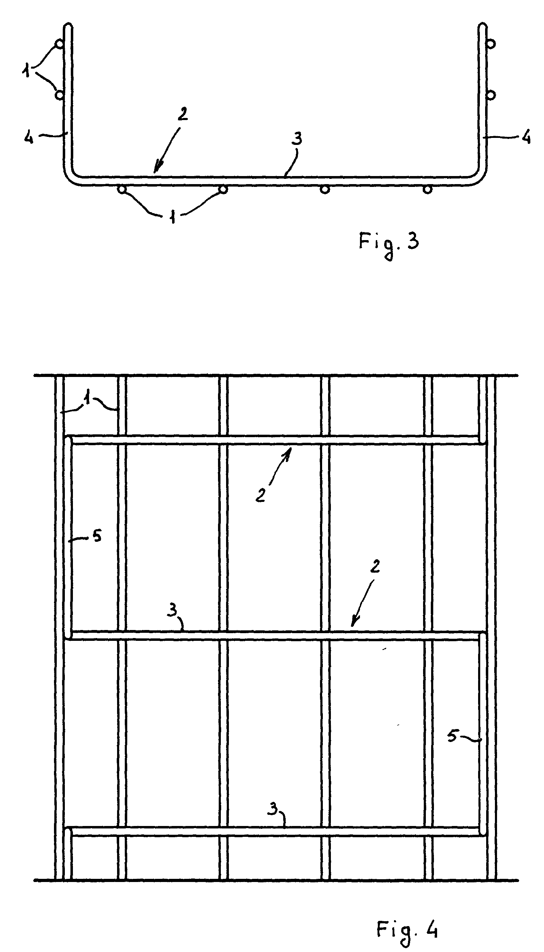

With particular reference to Figures 1 to 4, the cable tray is of the type comprising a meshwork of metal wires, for instance of steel and having a circular cross-section, which form a structure having a substantially U-shaped cross-section, as this is illustrated in Figure 3. In a preferred manner, the meshwork is in the first place manufactured as a plane structure by welding together the component parts that will be described in greater detail further on. The structure is then bent into a U-shape in such a manner as to obtain the cable tray illustrated in Figure 1.

In particular, the mesh-wire cable tray comprises a plurality of longitudinal metal wires 1 and a plurality of cross-members 2, each one of which is defined by a base portion 3 and upright side portions 4 (Figure 3).

According to the present invention, the upper ends of the side portions 4 of each such cross-member 2 are connected with similar upper ends of the side portions 4 of at least another cross-member 2 by means of respective longitudinal elements 5 that are made out of a single piece of metal wire bent along with the so connected cross-members 2.

In the example illustrated in Figure 1, respective longitudinal elements 5 alternately interconnect, on the two sides of the cable tray, contiguous pairs of cross-members 2. This may be most simply obtained by providing a plurality of cross-members 2 and longitudinal elements 5 in the form of a single piece 6 of metal wire duly bent and shaped as shown in Figure 2, ie. into a substantially fret-shaped or similarly shaped structure, which is further bent to a U-shaped cross-section after assembly.

In a preferred manner, all of the above cited portions 3, 4 and 5 of the cross-members 2 are substantially rectilinear, as this is actually illustrated in the Figures. It will however be appreciated that at least some of them may also be given a different shape, ie. for instance a curvilinear one.

In a preferred manner, furthermore, the longitudinal elements 5 of the cross-members form, on both sides thereof, the upper edges of the cable tray. On each side, at least a longitudinal wire 1 is preferably attached to the cross-members 2 in a position which is adjacent to and lower than the longitudinal elements 5, in such a manner as to prevent the cables from accidentally getting entrapped or entangled in or between the same cross-members when being laid down.

The main advantages of the present invention, as they emerge from the above description, can be summarized as follows:
- the mesh-wire cable tray is substantially free of dangerous sharp edges;
- the number of component parts needed to complete the mesh-wire cable tray is reduced drastically, since all cross-members 2 and the respective interconnecting longitudinal elements 5 are substantially formed by a single metal wire 6 that can be most conveniently shaped separately;
- since no butt welding is actually needed, the assembly of the component parts 1 and 6, which in a preferred manner have the same diameter, can be most easily carried out by means of a simpler spot welding technique using traditional and low-cost equipment;
- the robustness of the mesh-wire cable tray is greater than the one typically offered by traditional, prior-art solutions.

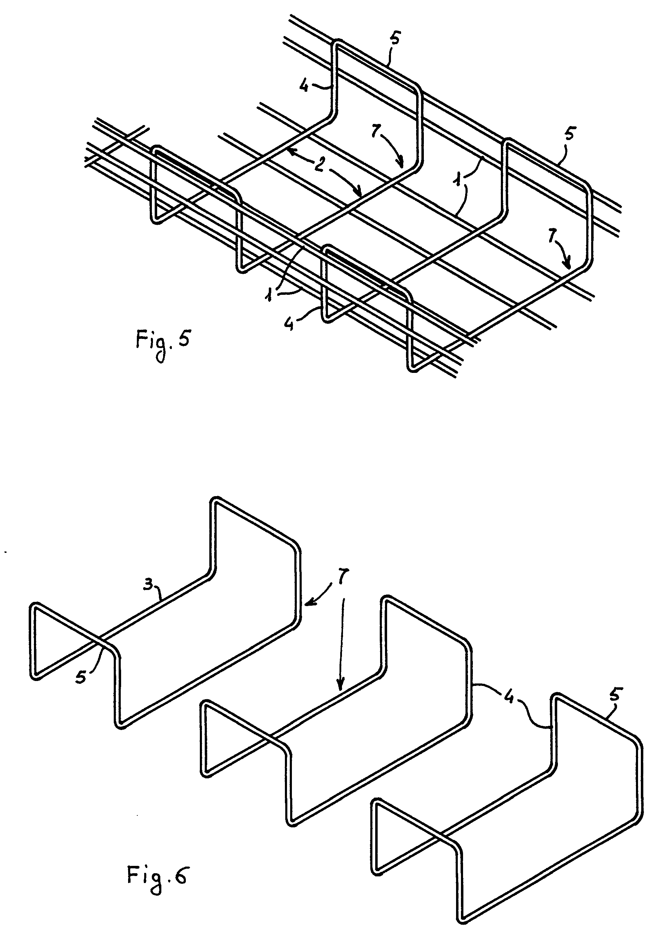

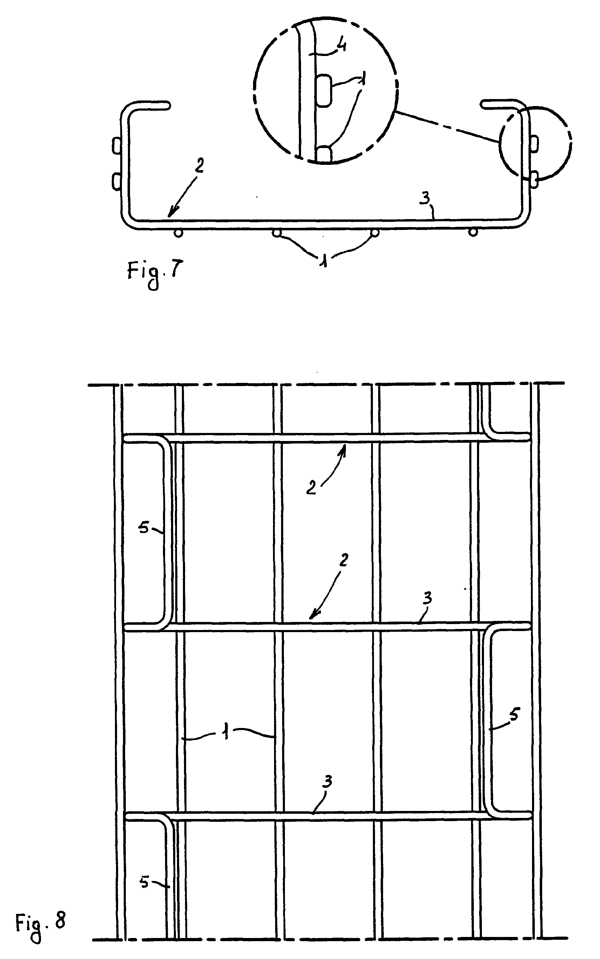

Similar advantages can be obtained with the variant illustrated in Figures 3, 5 and 6, in which pairs of longitudinal elements 5 on a side-by-side arrangement on both sides of the cable tray interconnect contiguous pairs of cross-members 2. For instance, this can be easily obtained by making pairs of cross-members 2 and longitudinal elements 5 in the form of single pieces 7 shaped as illustrated in Figure 6, ie. in a substantially closed-loop configuration that is then bent into a U-shape.

Such a variant actually requires a higher number of component parts than the embodiment described and illustrated with reference to Figures 1 to 4. However, the elements 7 are much more compact in their dimensions and, as a result, much simpler to manufacture and handle.

It will of course be appreciated that the described mesh-wire cable tray can be the subject of a number of modifications without departing from the scope of the present invention.

For instance, starting from the structure illustrated in Figures 1 to 4, the upper ends of at least some of the cross-members 2, and therefore of the cable tray itself, are further bent inwardly, preferably at an angle of 90°, as this is shown in Figures 7 and 8. This enables a structure to be provided, which is effective in preventing the cables from being removed accidentally upon having been laid down.

On the other hand, the above cited further bending can of course be provided also in the cable tray described with reference to Figures 3, 5 and 6.

In any case, at least one of the longitudinal wires 1 may have an elongated cross-section, with the major axis oriented in a substantially vertical direction. In a preferred manner, this is applied to the wires 1 that are attached to the sides 4 of the cross-members 2, as illustrated in Figure 7. Such a simple contrivance advantageously confers a greater flexural strength to the whole cable tray.

It will of course be appreciated that the mesh-wire cable tray according to the present invention may be subjected to appropriate surface finishing and/or coating or painting treatments and can in practical use be joined to other similar cable trays so as to form a complex cable-support structures. Furthermore, the described mesh-wire cable tray may be given even different shapes without departing from and affecting the features and characteristics recited in the appended claims.

## Claims

1. Mesh-wire cable tray comprising a meshwork formed by longitudinal metal wires welded to a plurality of cross-members, each one of which is shaped to a substantially U-shaped configuration with a base portion and upright side portions, **characterized in that** the upper ends of the side portions (4) of each cross-member (2) are connected with analogous upper ends of the side portions (4) of at least another cross-member (2) by means of respective longitudinal elements (5) that are provided in a single piece of metal wire (6; 7) bent with the so connected cross-members (2).

2. Mesh-wire cable tray according to claim 1, **characterized in that** respective longitudinal elements (5) alternately interconnect, on the two sides of the cable tray, contiguous pairs of cross-members (2).

3. Mesh-wire cable tray according to claim 1, **characterized in that** at least a longitudinal wire (1) is attached to the cross-members (2) in a position which is adjacent to and lower than said longitudinal elements (5), which form on each side the upper ends of the cable tray.

4. Mesh-wire cable tray according to claim 1, **characterized in that** pairs of said cross-members (2) and said longitudinal elements (5) are provided in the form of single pieces (7) shaped into a substantially closed-loop configuration that is then bent into a U-shape.

5. Mesh-wire cable tray according to claim 1, **characterized in that** the upper ends of at least a cross-member (2) are further bent inwardly.

6. Mesh-wire cable tray according to claim 1, **characterized in that** at least one of said longitudinal wires (1) has an elongated cross-section, with the major axis oriented in a substantially vertical direction.
